# EUROPEAN PATENT SPECIFICATION

(11) **EP 3 322 188 B1**
(45) Date of publication and mention of the grant of the patent: **25.12.2019**
(21) Application number: 16306476.9
(22) Date of filing: 10.11.2016
(51) Int. Cl.: H04N 21/2343, H04N 19/51, H04N 19/40

(54) **METHOD AND DEVICE FOR GENERATING A SIGNAL COMPRISING VIDEO TRANSCODING HINTS**
VERFAHREN UND VORRICHTUNG ZUR ERZEUGUNG EINES SIGNALS MIT VIDEOTRANSCODIERUNGSHINWEISEN
PROCÉDÉ ET DISPOSITIF POUR GÉNÉRER UN SIGNAL COMPRENANT DES INDICES DE TRANSCODAGE VIDÉO

(43) Date of publication of application: 16.05.2018
(73) Proprietor: Alcatel Lucent, 91620 Nozay (FR)
(72) Inventor: RONDAO ALFACE, Patrice, 2018 Antwerpen (BE); STEVENS, Christoph, 2018 Antwerpen (BE)
(74) Representative: MERH-IP Matias Erny Reichl Hoffmann Patentanwälte PartG mbB

(56) References cited:
- EP-A2- 1 137 289
- US-A1- 2016 212 438
- US-A1- 2016 255 355
- RUSERT THOMAS ET AL: "Guided just-in-time transcoding for cloud-based video platforms", 2016 IEEE INTERNATIONAL CONFERENCE ON IMAGE PROCESSING (ICIP), IEEE, 25 September 2016 (2016-09-25), pages 1489-1493, XP033016768, DOI: 10.1109/ICIP.2016.7532606 [retrieved on 2016-08-03]
- "Guided Transcoding in a Cloud DVR", NOT KNOWN,, no. Future_Video_Coding_Workkshop_4, 21 November 2015 (2015-11-21), XP030001655,

## Description

### Field of Invention

The present invention relates to video coding. Particular embodiments relate to a method and a device for generating a signal comprising video transcoding hints from a video stream available in a reference quality and in at least one different quality.

### Background

Long-tail HTTP-Adaptive Streaming (HAS) archives in a context of Video on Demand (VOD) services need to be transcoded just-in-time at the quality requested by the user. On the other band, for storage gains, an operator of the VOD service may have removed (most of) the lower qualities - this is the typical approach in the context of Cloud Digital Video Recorder (CDVR) approaches. Moreover, it is foreseen that in the future each content item may legally have to be individualized for each individual user (a so-called "private copy"), which may multiply the number of content items that have to be stored). There are also more use cases where storage and/or bandwidth cost reduction are important issues, and where low-complexity and low-delay just-in-time transcoding (JITX) may help to bring such Storage and/or bandwidth cost reduction.

EPI 137289 A2 discloses a content supplying apparatus includes a multimedia content server (101) which keeps a list of coding parameters at predetermined bit rates. The coding parameters for transmitting a bit stream are determined in accordance with a transmission capacity based on the coding parameter list. Based on the obtained coding parameters, the bit stream is converted and is transmitted to a transmission channel.

### Summary

Embodiments of a method, device and computer program product according to the invention are set out in the appended claims. They will be more readily understood after reading the following detailed description taken in conjunction with the accompanying drawings.

It is an object of embodiments according to the present invention to provide transcoding hints for JITX at reduced complexity. Embodiments according to the present invention aim in
particular to generate a signal comprising video transcoding hints, hereafter denoted by transcoding hint signal and abbreviated with THS, such as to later enable a fast JITX at reduced complexity. It is preferred that THS signals are generated very fast, preferably in the compressed
domain (that is, entropy encoded), because it has to be done for most content at the origin servers, as transcoding happens only on demand. Particular embodiments according to the present invention aim to generate quickly, for N+ 1 HAS qualities, thus corresponding to N+ 1 encoded video versions, N THS files, one for each HAS quality except a reference quality (preferably, but
not necessarily the best video quality, according to a suitable measure, for example the version with the primarily the highest resolution and secondarily the highest bitrate, or for example the version with the highest intrinsic visual quality).

Intrinsic visual quality of a video is to be understood in this document as a value resulting from an objective or subjective measure of the video. Objective metrics may include but are not restricted to PSNR (Peak Signal to Noise Ratio), SAD (Sum of Absolute Differences), MSE (Mean Square Error), etc. Subjective metrics include MOS measures (Mean Opinion Score) though subjective experiments, or measures interpolated from databases of such scores for specific content, etc.

Video quality, in this document also referred to as "quality", measures may comprise these "intrinsic visual quality measures", but also values of bitrate, resolution, or any combination of these.

According to a first aspect of the present invention there is provided a method for generating a signal comprising video transcoding hints from a video stream available in a reference quality and in at least one different quality. The method comprises: receiving the video stream in the reference quality; receiving the video stream in the at least one different quality; extracting first prediction data of the received video stream in the reference quality; extracting second prediction data of the received video stream in the at least one different quality; and, based on the extracted first prediction data and on the extracted second prediction data, generating a transcoding hint signal comprising: at least one transcoding instruction hint for extending a prediction search technique for encoding the video stream from the reference quality into the at least one different quality based on the extracted first prediction data; and at least one respectively associated complexity cost of performing the respective extended prediction search technique.

In this way, the method provides transcoding hints (in particular the at least one transcoding instruction hint) for JITX at reduced complexity, since the at least one transcoding hint is accompanied by the at least one respectively associated complexity cost. This allows a transcoder to perform JITX at reduced and controllable complexity, because a transcoder can refer to the at least one transcoding instruction hint in the transcoding hint signal to either extend or not, or only partially, its prediction search technique, in awareness of the associated complexity cost or savings of doing so.

In an embodiment, the method optionally comprises scaling the extracted first prediction data to a resolution of the extracted second prediction data. In a further developed embodiment, the method comprises: determining a prediction search technique extension to transform the optionally scaled extracted first prediction data into the extracted second prediction data; evaluating a complexity cost of performing the determined prediction search technique extension; and determining an intrinsic visual quality difference of performing the determined prediction search technique extension; wherein the generating is performed based on the evaluated complexity cost and the determined intrinsic visual quality difference.

In this way, the intrinsic visual quality difference, i.e. the difference in intrinsic visual quality between an encoding of the video stream from the reference quality into the at least one different quality on the one hand and the video stream in the at least one different quality on the other hand, can be taken into account for a transcoder to perform JITX.

In another further developed embodiment, the method comprises: decoding the video stream in the reference quality in order to reconstruct its pixel data and to extract, as the first prediction data, its prediction data; decoding the video stream in the at least one different quality in order to reconstruct its respective pixel data and to extract, as the second prediction data, its respective prediction data; computing a first prediction of the video stream in the reference quality based on the video stream in the reference quality and its extracted prediction data; computing a second prediction of the video stream in the at least one different quality based on the video stream in the at least one different quality and its extracted prediction data; and determining, as the intrinsic visual quality difference of performing the determined prediction search technique extension, an intrinsic visual quality difference between first prediction and the second prediction.

In another further developed embodiment, the method comprises: parsing the video stream in the reference quality in coded form in order to extract, as the first prediction data, its prediction data from its coded form; decoding the video stream in the at least one different quality in order to reconstruct its respective pixel data and to extract, as the second prediction data, its respective prediction data; extracting first input rate data from the video stream in the reference quality and second input rate data from the video stream in the at least one different quality; reconstructing pixel data of the video stream in the reference quality based on the extracted first prediction data and the determined prediction search technique extension; and determining an intrinsic visual quality of the reconstructed pixel data, taking into account the evaluated complexity cost and taking into account the extracted first and second input rate data; wherein the pixel data of the video stream in the reference quality are preferably reconstructed limited to intra frames of the video stream in the reference quality.

In this way, complexity may be reduced and operations may be sped up, as it can be avoided to (fully) decode the video stream in the reference quality by simply parsing it in its coded form.

In another further developed embodiment, the method comprises: parsing the video stream in the reference quality in coded form in order to extract, as the first prediction data, its prediction data from its coded form; parsing the video stream in the at least one different quality in coded form in order to extract, as the second prediction data, its respective prediction data from its respective coded form; extracting first input rate data from the video stream in the reference quality and second input rate data from the video stream in the at least one different quality; determining a semantic characteristic of the video stream and obtaining a semantic model corresponding to the video stream; and estimating an intrinsic visual quality of the video stream encoded from the reference quality into the at least one different quality, taking into account the evaluated complexity cost and taking into account the extracted first and second input rate data.

In this way, complexity may be further reduced and operation may be further sped up, as it can be avoided to (fully) decode the video stream in the reference quality and in the at least one different quality by simply parsing them in their coded form.

In another further developed embodiment, the method comprises: learning to predict an intrinsic visual quality of pixel data reconstructed using the extended prediction search technique, based on any one or more of the following: the first prediction data; the second prediction data; at least one of a semantic model corresponding to the video stream, and pixel data of the video stream in the at least one different quality; input rate data from the video stream in the reference quality; and input rate data from the video stream in the at least one different quality.

In this way, it can be learned what the intrinsic visual quality impact is for given prediction search technique extension (for example a local search refinement), based on prediction hints and/or on a semantic model of the video.

In another further developed embodiment, the method comprises using the learned prediction for determining the intrinsic visual quality of pixel data reconstructed using the extended prediction search technique.

According to an exemplary embodiment, the at least one transcoding instruction hint represents a prediction search technique refinement by adapting a search space of the prediction search technique; and/or the at least one respectively associated complexity cost represents a computational load required for encoding the video stream into the at least one other quality using the adapted search space of the prediction search technique. In this way, a transcoder can be readily controlled to adapt its prediction search technique based on the at least one transcoding instruction hint.

According to an exemplary embodiment, the at least one transcoding hint signal comprises at least one prediction data translation hint for translating prediction data of the video stream in the reference quality into the at least one other quality. In this way, a transcoder can refer to prediction data available in the video stream in the reference quality, while space can be saved by not storing the corresponding prediction data of the video stream in the at least one other quality, or indeed the entire video stream in the at least one other quality.

According to an exemplary embodiment, the prediction data translation hint comprises a bit sequence indicating a predefined spatial region of prediction data of the video stream in the reference quality. In this way, a space-efficient representation can be used to indicate the prediction data to be translated.

According to an exemplary embodiment, the at least one transcoding hint signal comprises at least one quantization parameter hint configured for specifying at least one quantization parameter to be used for encoding at least one predefined spatial region of the video stream in the at least one other quality. The at least one quantization parameter preferably comprises for a given predefined spatial region of the at least one predefined spatial region at least one quantization parameter difference with respect to a predefined spatial region preceding the given predefined spatial region. In this way, rate control can be ensured, as the video stream in the reference quality may not contain a useful indication of a quantization parameter to be used for encoding the video stream in the at least one other quality.

According to an exemplary embodiment, the at least one transcoding hint signal comprises a plurality of hints including the at least one transcoding instruction hint, and each hint of the plurality of hints is associated with a frame of the video stream in the reference quality. In this way, a transcoder can readily process frames of the video stream in the reference quality in order to generate the video stream in the at least one other quality.

According to another aspect of the present invention, there is provided a device for generating a signal comprising video transcoding hints from a video stream available in a reference quality and in at least one different quality. The device comprises the following: a first terminal configured for receiving the video stream in the reference quality; a second terminal configured for receiving the video stream in the at least one different quality; a first prediction data extraction module configured for extracting first prediction data of the received video stream in the reference quality; a second prediction data extraction module configured for extracting second prediction data of the received video stream in the at least one different quality; and a prediction assessment module configured for, based on the extracted first prediction data and on the extracted second prediction data, generating a transcoding hint signal comprising: at least one transcoding instruction hint for extending a prediction search technique for encoding the video stream from the reference quality into the at least one different quality based on the extracted first prediction data; and at least one respectively associated complexity cost of performing the respective extended prediction search technique.

It will be understood by the skilled person that the features and advantages disclosed hereinabove with respect to various embodiments of the method may also apply, *mutatis mutandis,* to various embodiments of the device.

In an embodiment, the device optionally comprises a scaler configured for scaling the extracted first prediction data to a resolution of the extracted second prediction data. In a further developed embodiment, the prediction assessment module is configured for determining a prediction search technique extension to transform the optionally scaled extracted first prediction data into the extracted second prediction data; evaluating a complexity cost of performing the determined prediction search technique extension; determining an intrinsic visual quality difference of performing the determined prediction search technique extension; and performing the generating based on the evaluated complexity cost and the determined intrinsic visual quality difference.

In a further developed embodiment, the first prediction data extraction module comprises a first decoder configured for decoding the video stream in the reference quality in order to reconstruct its pixel data and to extract, as the first prediction data, its prediction data. The second prediction data extraction module comprises a second decoder configured for decoding the video stream in the at least one different quality in order to reconstruct its respective pixel data and to extract, as the second prediction data, its respective prediction data. The prediction assessment module is configured for: computing a first prediction of the video stream in the reference quality based on the video stream in the reference quality and its extracted prediction data; computing a second prediction of the video stream in the at least one different quality based on the video stream in the at least one different quality and its extracted prediction data; and determining, as the intrinsic visual quality difference of performing the determined prediction search technique extension, an intrinsic visual quality difference between first prediction and the second prediction.

In a further developed embodiment, the first prediction data extraction module comprises a parser configured for parsing the video stream in the reference quality in coded form in order to extract, as the first prediction data, its prediction data from its coded form. The second prediction data extraction module comprises a decoder configured for decoding the video stream in the at least one different quality in order to reconstruct its respective pixel data and to extract, as the second prediction data, its respective prediction data. The prediction assessment module is further configured for: extracting first input rate data from the video stream in the reference quality and second input rate data from the video stream in the at least one different quality; reconstructing pixel data of the video stream in the reference quality based on the extracted first prediction data and the determined prediction search technique extension; determining an intrinsic visual quality of the reconstructed pixel data, taking into account the evaluated complexity cost and taking into account the extracted first and second input rate data; wherein the prediction assessment module is preferably configured to reconstruct the pixel data of the video stream in the reference quality limited to intra frames of the video stream in the reference quality.

In a further developed embodiment, the first prediction data extraction module comprises a first parser configured for parsing the video stream in the reference quality in coded form in order to extract, as the first prediction data, its prediction data from its coded form. The second prediction data extraction module comprises a second parser configured for parsing the video stream in the at least one different quality in coded form in order to extract, as the second prediction data, its respective prediction data from its respective coded form. The prediction assessment module is further configured for: extracting first input rate data from the video stream in the reference quality and second input rate data from the video stream in the at least one different quality; determining a semantic characteristic of the video stream and obtaining a semantic model corresponding to the video stream; and estimating an intrinsic visual quality of the video stream encoded from the reference quality into the at least one different quality, taking into account the evaluated complexity cost and taking into account the extracted first and second input rate data.

In a further developed embodiment, the device comprises a machine learning module configured for learning to predict an intrinsic visual quality of pixel data reconstructed using the extended prediction search technique, based on any one or more of the following: the first prediction data; the second prediction data; at least one of a semantic model corresponding to the video stream, and pixel data of the video stream in the at least one different quality; input rate data from the video stream in the reference quality; and input rate data from the video stream in the at least one different quality.

In a further developed embodiment, the prediction assessment module is configured for determining the intrinsic visual quality of pixel data reconstructed using the extended prediction search technique, using the machine learning module.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the computer program product.

According to yet another aspect of the present invention, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the digital storage medium.

According to yet another aspect of the present invention, there is provided a device programmed to perform a method comprising the steps of any one of the methods of the method embodiments described above.

According to yet another aspect of the present invention, there is provided a method for downloading to a digital storage medium a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the method for downloading.

In the context of the present specification, it is to be understood that transcoders may be referred to as encoders, because a transcoder encodes an input to an output.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

### Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:
Figure 1 schematically illustrates an embodiment of a device according to the present invention;
Figure 2 schematically illustrates another embodiment of a device according to the present invention, e.g. a further development of the device embodiment shown in Figure 1;
Figure 3 schematically illustrates another embodiment of a device according to the present invention, e.g. another further development of the device embodiment shown in Figure 1;
Figure 4 schematically illustrates another embodiment of a device according to the present invention, e.g. another further development of the device embodiment shown in Figure 1;
Figure 5 schematically illustrates a flowchart of an embodiment of a method according to the present invention, e.g. as performed by the device embodiment shown in Figure 1; and
Figure 6 schematically illustrates a flowchart of another embodiment of a method according to the present invention, e.g. as performed by the device embodiment shown in Figure 1.

### Description of embodiments

In the present application, reference is made to THS or transcoding hint signals, and related information, described in the European patent application entitled "Method and transcoder for video transcoding" in the name of the Applicant and filed with application number EP 16306474.4 on the same day as the present application.

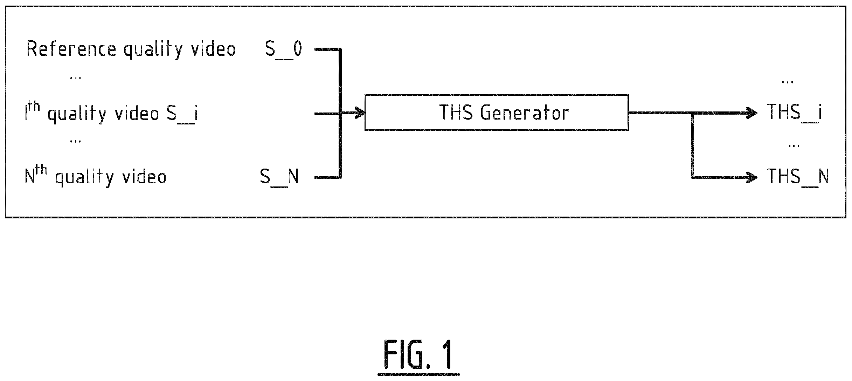

Figure 1 schematically illustrates an embodiment of a device according to the present invention. The figure shows how the device, denoted "THS Generator", taking as input a plurality of input video streams including a video stream in a reference quality (preferably the highest, or best, intrinsic visual quality video, as described above), denoted S_0, and the same video stream in one or more different qualities (for example different bitrates and/or different resolutions), including for example an intermediate quality video denoted S_i and a low quality video denoted S_N. The device produces as output one or more THS signals THS_i, THS_N, preferably one THS signal for each different quality version of the video stream. In other words, the device may encode N+1 different quality versions (including the reference quality version) into N THS signals, to be used with the video stream in the reference quality.

For each spatial region (e.g. a macroblock) in each prediction frame of a video stream (e.g. a HAS stream of a given quality) for which a corresponding THS signal has been generated, the following operations may for example be performed:
1) assess the best prediction hint available in the corresponding spatial region in the highest quality (so as to encode its block address as a prediction data translation hint, denoted HI);
2) assess the search complexity required to find the best prediction as a transcoding instruction hint H2 representing an extension for a prediction search technique (e.g. a local search refinement), based on the prediction data translation hint computed in the assessment of the best prediction hint;
3) assess the intrinsic visual quality gain (using a suitable measure such as PSNR (Peak Signal-to-Noise Ratio), SAD (Sum of Absolute Differences), or SSIM (Structural Similarity), etc.) that would be obtained by performing the prediction search technique extension;
4) optionally include the (delta) quantization parameter as a quantization parameter hint from the input video stream in the given quality (e.g. using entropy encoding); and
5) optionally entropy encode (if the additional complexity required to do so is available) and write the results of the above steps to an output THS signal.

The most time-consuming aspect of the generation of the THS, is to evaluate the intrinsic visual quality gain (using a measure such as PSNR (Peak Signal-to-Noise Ratio), SAD (Sum of Absolute Differences), or SSIM (Structural Similarity), etc.), for the recommended local search complexity. Whereas assessing the best prediction hint and assessing the required search complexity do not require full decoding of the input video stream, but require only parsing the predictions in the compressed domain, naively assessing the intrinsic visual quality gain requires comparing reconstructed pixels, and thus decoding the input video stream.

It is an insight of the inventors, in order to speed up these operations, to strive to only require to partially decode the input streams, that is, to avoid any extra decoding. Particular embodiments according to the invention may use machine learning to learn and evaluate what the intrinsic visual quality impact is for given local search complexity, based on the best prediction hints and on a semantic model of the video. In this way, some of the operations can be performed in the compressed domain, such that the input video stream need not be decoded, which saves on complexity and speed.

A semantic model of the video stream may be predefined, for example if the video stream corresponds to a genre of video streams such as series, action movies, etc., which typically share common production, lighting and signal properties. However, in a further developed embodiment, the semantic model of the video stream may also be learned by clustering video streams based on such properties and by using a number of segments to identify the best semantic model for the video stream to be converted into a THS signal.

Furthermore, the processing complexity can also be lowered if feedback is available, e.g. if a given video stream is being transcoded for another user, the output intrinsic visual quality and the THS may advantageously be ingested in order to update the THS signal.

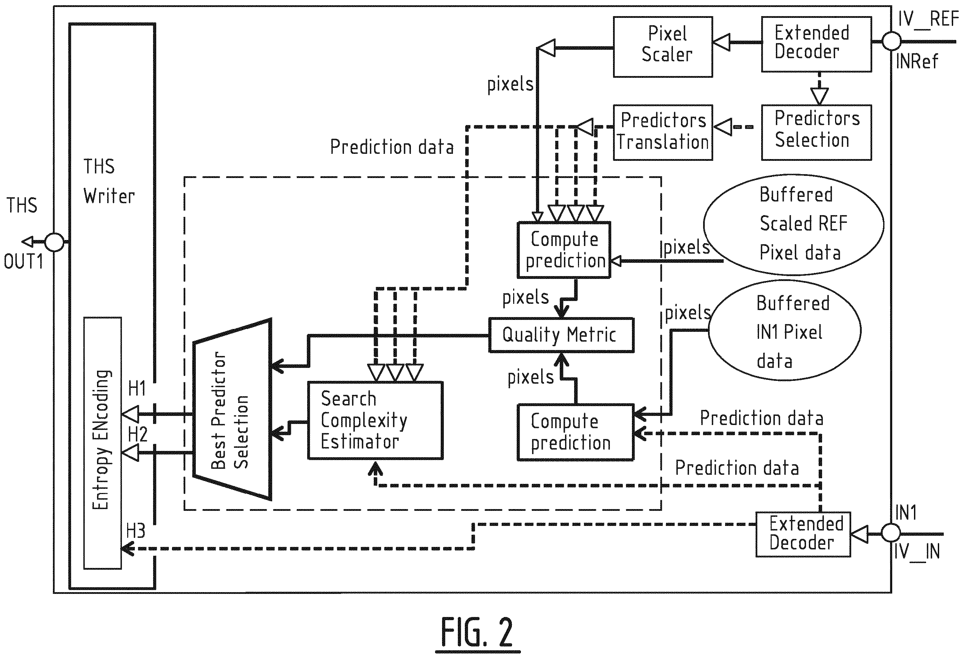

Figure 2 schematically illustrates another embodiment of a device according to the present invention, e.g. a further development of the device embodiment shown in Figure 1.

The device comprises a first input terminal INRef configured for receiving an input video stream in a reference quality, and a second input terminal IN1 configured for receiving an input video stream denoted IV_IN (of the same video) in a different quality than the reference quality. It will be noted that the video streams may be actual streams but may also be video files or the like. These input video streams are usually encoded video streams, which encoding may have been with (traditional) encoding schemes such as H.264/265 or HEVC or another one. It is to be remarked that these encoding schemes can be different for the different input video streams.

The input video stream in the reference quality if fed to an extended decoder, configured for decoding the input video stream, and for providing the decoded video stream to a pixel and/or frame scaler for changing the spatial and/or temporal (e.g. by merging frames into one frame by dropping one or more frames or by using motion-compensated frame averaging) resolution (if necessary) and to a predictors selection module configured for selecting one or more prediction data from the prediction data of the decoded video stream. The predictors selection module provides the selected prediction data to a predictors translation module for translating (e.g. scaling) the prediction data from the format of the reference quality to the format of the different quality (if necessary).

The input video stream in the different quality is fed to another extended decoder, that is configured for decoding the input video stream in order to determine at least prediction data (motion vectors, reference frames, block partition, quantization parameters, etc.) of the input video in the different quality (in particular prediction data of predefined spatial regions (e.g. macroblocks, blocks, coding units, etc.) of the input video stream in the different quality) and preferably also quantization parameter differences denoted H3 representing difference (i.e. delta) values for the quantization parameters to be used for predefined spatial regions (e.g. macroblocks, blocks, coding units, etc.) of the input video stream in the different quality.

The device may further be configured to buffer the scaled video stream in the reference quality as buffered scaled reference) pixel data and to buffer the decoded video stream in the different quality as buffered IN1 pixel data.

The pixel data and the prediction data of the respective decoded video streams may be fed to a prediction assessment module (PAM). In particular, they may be fed to respective compute prediction modules of the PAM that are configured for computing respective predicted pixel data for each of the input video streams. The PAM may further comprise an intrinsic visual quality metric module configured for comparing the respective computed predicted pixel data using an intrinsic visual quality metric (for example PSNR, SSIM, SAD, etc.). Moreover, the PAM may further comprise a search complexity estimator configured for, based on the respective prediction data, estimating the added complexity required for performing the prediction associated with the respective prediction data. The PAM may further comprise a best prediction selection module configured for selecting, based on the output of the intrinsic visual quality metric module and the search complexity estimator, the best (according to some suitable optimization metric) prediction.

In principle, the device may suffice with the components described above, as the output of the best predictor selection module (denoted H1 for prediction data hints and H2 for transcoding instruction hints) may as such be used to generate a THS signal for the input video stream in the different quality.

Optionally, the device may further comprise a THS writer module configured for entropy encoding the output of the best predictor selection module. Rate control information (such as (delta) quantization parameters denoted H3) may advantageously also be included in the entropy encoding. The output, be it direct from the best predictor selection module or via the THS writer module may be output by the device using an output terminal OUT1, as a THS signal.

The pixel data produced by the respective extended decoders may be used to compare the intrinsic visual quality of prediction data of the video stream in the reference quality, after scaling, with the original prediction of the input video stream in the different quality. The difference in their final intrinsic visual quality, for example measured in PSNR, SSIM or SAD, may be used to signal to a transcoder how much intrinsic visual quality can be gained for the required extra complexity that would be needed to find the optimal prediction.

Predictions from the video stream in the reference quality may be translated (for example copied and/or scaled) to the input video stream in the different quality, which needs to be converted into a THS file. Computing the distance between the predictions allows to estimate the additional complexity that is required for the transcoder in order to extend the prediction search technique (in other words, refine the prediction search) from the video stream in the reference quality and to obtain a suitable or optimal prediction. This may for example be done by computing the distance between motion vectors, which allows to define a search window accurately, or with differences in block partitions, and reference frame indexes.

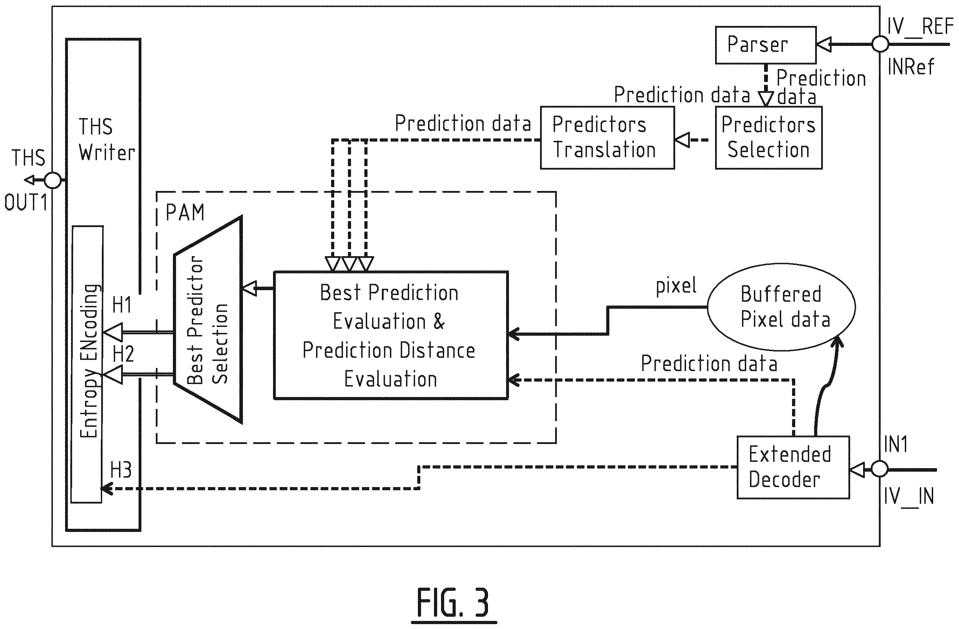

Optionally, using this embodiment, a convolutional neural network can be trained, that can be used to speed up the process in later runs - as will be explained with reference to Figure 3.

It will be understood that the modules shown in the figures are intended for illustrative purposes only, and that a practical device implementing an embodiment of a device according to the invention may comprise more or fewer modules, and may combine the functionality of multiple modules described herein as separate modules into a single module.

Figure 3 schematically illustrates another embodiment of a device according to the present invention, e.g. another further development of the device embodiment shown in Figure 1 or Figure 2.

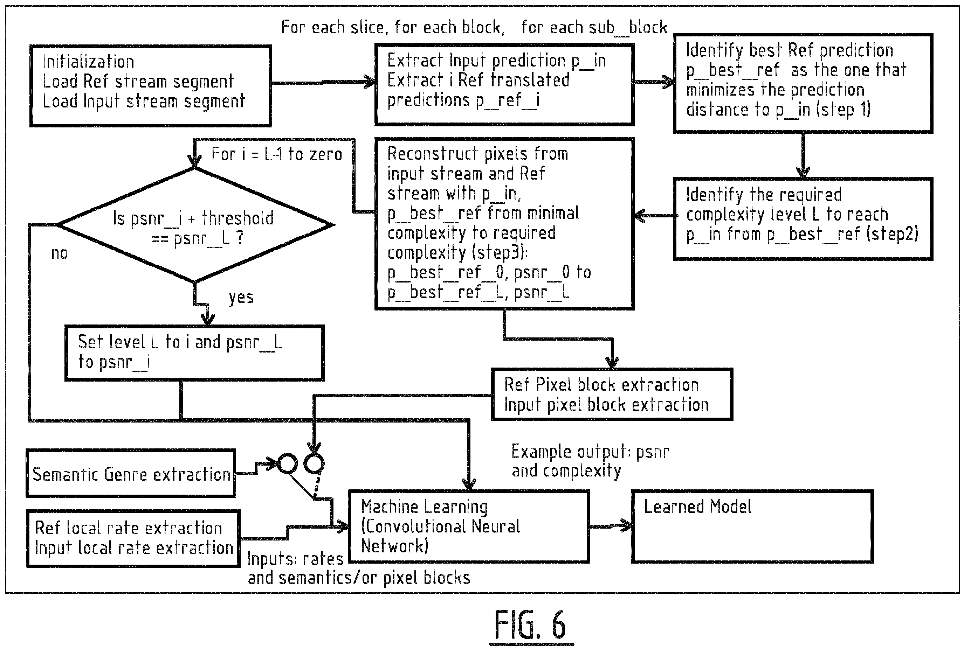

This embodiment differs from that of Figure 2 in particular in the use of machine learning in order to avoid fully decoding both input streams. For a discussion of how to train a machine learning algorithm, for example a convolutional neural network, refer to Figure 6, although other embodiments are also possible.

This embodiment aims to reduce the complexity of the THS generation in comparison to the embodiment of Figure 2. The video stream in the reference quality is only parsed by a parser for extracting the prediction data, and is not fully decoded, because it is preferably the stream with the largest spatial resolution and bitrate (being the reference quality) and hence decoding it would involve a significant complexity cost. Consequently, this embodiment does not require a decoder for the input video stream in the reference quality, nor a pixel scaler (or any frame scaler(s) for the temporal resolution).

The input video stream in the different quality may still be decoded by an extended decoder as in the embodiment of Figure 2, in order to produce the prediction data of that input video stream and its (delta) quantization parameters, as this video stream typically requires a lower decoding complexity (being a different quality than the reference quality).

The prediction data of the video stream in the reference quality (as parsed by the parser, as selected by the predictors selection module, and as translated (e.g. scaled) by the predictors translation module), the prediction data of the video stream in the different quality, and the reconstructed pixels of the decoded video stream in the different quality (from the extended decoder, optionally buffered in the device as buffered pixel data), are fed to a prediction assessment module (PAM). In this embodiment, the PAM comprises a "best selection evaluation & prediction distance evaluation" module, configured for evaluating the best selection and for evaluating the prediction distance, in a manner similar to the PAM of the embodiment of Figure 2, as well as a best prediction selection module as in the embodiment of Figure 2. This embodiment may optionally further comprise a THS writer module as in the embodiment of Figure 2.

The inputs to the PAM in this embodiment are in other words the input rates, and the reconstructed pixels using the predictions of the reference quality and their best (according to some suitable measure) extensions (refinements) with their corresponding complexity. The output of the PAM in this embodiment is in other words the predicted intrinsic visual quality, per block, per complexity level. Consequently, the video stream in the reference quality no longer needs to be fully decoded, but only parsed to extract its prediction data.

Regarding the complexity of this embodiment, the main bottleneck is the decoding of the input video stream in the different quality. However, it is advantageous in a further developed embodiment to limit this to intra frames only and to not add residuals while estimating the best predictions, in order to further reduce complexity.

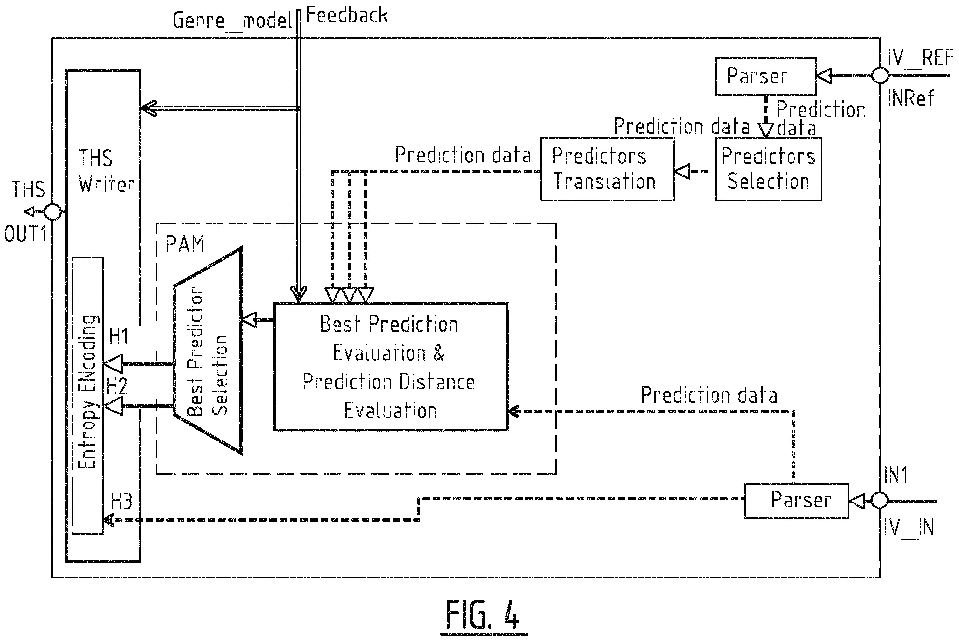

Figure 4 schematically illustrates another embodiment of a device according to the present invention, e.g. another further development of the device embodiment shown in Figure 1, Figure 2 or Figure 3.

This embodiment corresponds to the embodiment of Figure 3, with the difference that the input video stream in the different quality is also not fully decoded but only parsed, similar to the input video stream in the reference quality. Consequently, this embodiment does not require a decoder for the input video stream in the different quality either.

This is based on a segmentation of the content represented in the video streams using predefined video stream models that are clustered into genres, since genres are likely to have comparably complexity for a given target quality. In particular, using a feedback loop to provide an appropriate video stream model allows to only parse the respective input video streams without decoding them.

Using machine learning as illustrated on flowchart represented on Figure F2, it is also possible to cluster video segments in classes for which the transcoding complexity is similar for a given target quality. This makes sense for series, some type of movies, or parts of these, where it can be detected that the scene is static or not very sharp for example, or on the contrary requiring a lot of transcoding complexity to bring decent intrinsic visual quality. By estimating the correlation of the input video with the clustered genres, it is possible to use machine learning to predict the THS. Although less accurate, the complexity is then lower, as only parsing is required.

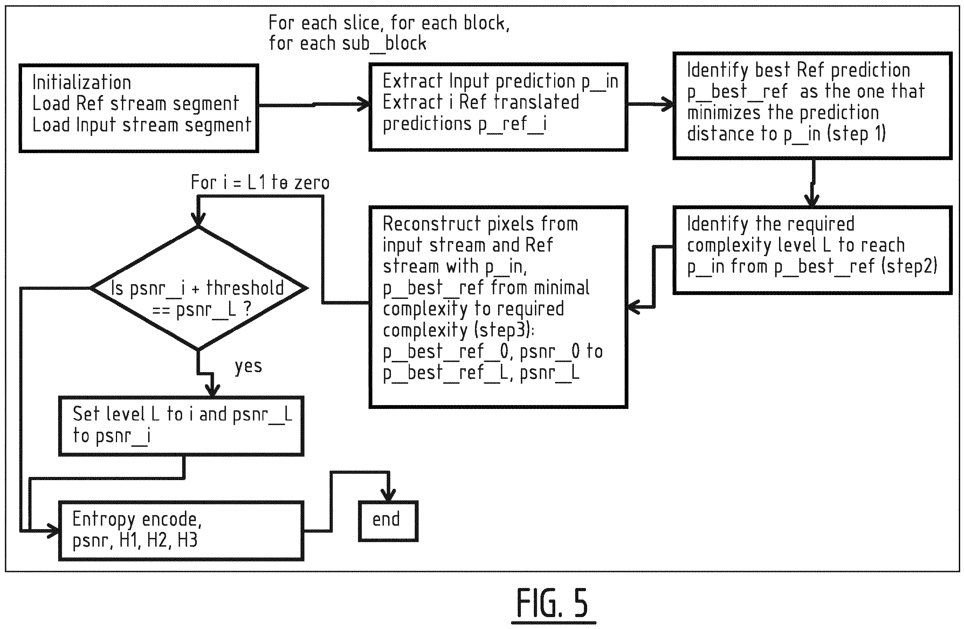

Figure 5 schematically illustrates a flowchart of an embodiment of a method according to the present invention, e.g. as performed by the device embodiment shown in Figure 1.

The figure shows that, after initialization, a stream segment of the video stream in the reference (denoted "ref') quality is loaded and a stream segment of the video stream in the different (denoted "input")) quality are loaded.

Subsequently, for each slice, for each block (or other predefined spatial region) and for each sub-block (if applicable), the prediction data p_in of the video stream in the different quality and the translated prediction data p_ref_i of the video stream in the reference quality are extracted.

Subsequently, in the step denoted as "step 1" for convenience, the best (according to a suitable measure) prediction data p_best_ref of the video stream in the reference quality is identified, preferably as the prediction data that minimizes the prediction distance (for example differences between motion vectors) to p_in.

Subsequently, in the step denoted as "step 2" for convenience, the required complexity level L to reach p_in from p_best_ref is identified - in other words, it is determined how complex it is to extend (refine) the prediction data p_best_ref of the video stream in the reference quality in order to obtain (or approximate closely) the prediction data p_in of the video stream in the different quality.

Subsequently, pixels from the video stream in the different quality (denoted "input stream") and from the video stream in the reference quality (denoted "ref stream") may be reconstructed using p_in and p_best_ref. This may be performed iteratively from a minimal level of complexity to a required level of complexity, denoted as "step 3" for convenience. In this manner, one or more distinct sets are generated each including the best prediction data for the given complexity level up to the required complexity level L (p_best_ref_0, ..., p_best_ref_L) and an associated intrinsic visual quality of the pixels (denoted as psnr_0, ..., psnr_L, although other measures than PSNR, such as SSIM or SAD may also be used).

Subsequently, for each given complexity level (denoted "i") from the required complexity level to the least complex complexity level, the respective associated intrinsic visual quality of the pixels psnr_i (optionally increased with a threshold) may be compared to the required intrinsic visual quality level psnr_L. If these correspond, the required complexity level L may be set to the given complexity level i, and likewise the required intrinsic visual quality level psnr_L may be set to psnr_i.

Optionally, subsequently, the thus determined prediction data H1 and transcoding instructions H2, as well as optionally the intrinsic visual quality psnr and optionally the quantization parameter difference H3 may be entropy encoded.

Figure 6 schematically illustrates a flowchart of another embodiment of a method according to the present invention, e.g. as performed by the device embodiment shown in Figure 1.

The embodiment of Figure 6 corresponds with the embodiment of Figure 5, with the following differences. After the respective pixels have been reconstructed, a pixel block of the video stream in the reference quality (denoted "ref pixel block") and a pixel block of the video stream in the different quality (denoted "input pixel block") may be extracted. Furthermore, a local rate of the video stream in the reference quality (denoted "ref local rate") and a local rate of the video stream in the different quality (denoted "input local rate") may be extracted. Moreover, instead of entropy encoding the determined data, these may be fed to a machine learning module, for example a convolutional neural network. Additionally, the extracted ref local rate and input local rate, as well as the extracted ref pixel block and the input pixel block and/or a semantic genre extracted from the video streams may be fed to the machine learning module. Using as inputs the respective local rates, and the semantics and/or the respective pixel blocks, the machine learning module may produce as output an intrinsic visual quality assessment (denoted "psnr") and an associated complexity level, as a learned model, to be used in the above described embodiments.

It will be understood that the embodiment of Figure 6 may be applicable together with any one or more of the embodiments of Figure 2, Figure 3 and Figure 4.

Embodiments according to the present invention allow to better control complexity of JITX. The generation of the transcoding hint signals (THSs) is preferably done for most content and should be efficient in terms of computation. It will further be understood that embodiments according to the present invention may also be applicable in other contexts than the above-discussed CDVR and archives - for example, cable operators could lower bandwidth usage by converting lower ABR qualities into THS files and use JITX at the edge of the content delivery network.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. A method for generating a signal comprising video transcoding hints from a video stream available in a reference quality (S_0) and in at least one different quality (S_i, S_N), the method comprising:
- receiving the video stream in the reference quality (IV_REF);
- receiving the video stream in the at least one different quality (IV_IN);
- extracting first prediction data of the received video stream in the reference quality by decoding the video stream in the reference quality (IV_REF) or by parsing the video stream in the reference quality (IV_REF) in coded form;
- extracting second prediction data of the received video stream in the at least one different quality by decoding the video stream in the at least one different quality (IV_IN) or by parsing the video stream in the at least one different quality (IV_IN) in coded form; and
- based on the extracted first prediction data and on the extracted second prediction data,
generating a transcoding hint signal (THS) comprising: at least one transcoding instruction hint (H2) for extending a prediction search technique for encoding the video stream from the reference quality into the at least one different quality based on the extracted first prediction data; and at least one respectively associated complexity cost of performing the respective extended prediction search technique, wherein the at least one transcoding instruction hint represents a prediction search technique refinement by adapting a search space of the prediction search technique, wherein the at least one respectively associated complexity cost represents a computational load required for encoding the video stream into the at least one other quality using the adapted search space of the prediction search technique.

2. The method of claim 1, comprising:
- optionally scaling the extracted first prediction data to a resolution of the extracted second prediction data;
- determining a prediction search technique extension to transform the optionally scaled extracted first prediction data into the extracted second prediction data;
- evaluating a complexity cost of performing the determined prediction search technique extension; and
- determining an intrinsic visual quality difference of performing the determined prediction search technique extension, wherein the intrinsic visual quality difference is a difference in intrinsic visual quality between an encoding of the video stream from the reference quality into the at least one different quality and the video stream in the at least one different quality, wherein the intrinsic visual quality of the video stream is a value resulting from a measure of the video stream using an objective metrics (PSNR, SAD, MSE, etc.) or a subjective metrics (MOS, etc.);
wherein the generating is performed based on the evaluated complexity cost and the determined intrinsic visual quality difference.

3. The method of any one of the claims 1-2, comprising:
- the decoding of the video stream in the reference quality (IV_REF) in order to reconstruct its pixel data and to extract, as the first prediction data, its prediction data;
- the decoding of the video stream in the at least one different quality (IV_IN) in order to reconstruct its respective pixel data and to extract, as the second prediction data, its respective prediction data;
- computing a first prediction of the video stream in the reference quality based on the video stream in the reference quality (IV_REF) and its extracted prediction data;
- computing a second prediction of the video stream in the at least one different quality based on the video stream in the at least one different quality (IV_IN) and its extracted prediction data; and
- determining, as the intrinsic visual quality difference of performing the determined prediction search technique extension, an intrinsic visual quality difference between the first prediction and the second prediction.

4. The method of any one of the claims 1-2, comprising:
- the parsing of the video stream in the reference quality (IV_REF) in coded form in order to extract, as the first prediction data, its prediction data from its coded form;
- the decoding of the video stream in the at least one different quality (IV_IN) in order to reconstruct its respective pixel data and to extract, as the second prediction data, its respective prediction data;
- extracting first input rate data from the video stream in the reference quality (IV_REF) and second input rate data from the video stream in the at least one different quality (IV_IN);
- reconstructing pixel data of the video stream in the reference quality (IV_REF) based on the extracted first prediction data and the determined prediction search technique extension; and
- determining an intrinsic visual quality of the reconstructed pixel data, taking into account the evaluated complexity cost and taking into account the extracted first and second input rate data;
wherein the pixel data of the video stream in the reference quality are preferably reconstructed limited to intra frames of the video stream in the reference quality.

5. The method of any one of the claims 1-2, comprising:
- determining a semantic characteristic of the video stream and obtaining a semantic model corresponding to the video stream; and, depending on the determined semantic characteristic and the obtained semantic model, performing the following:
- the parsing of the video stream in the reference quality (IV_REF) in coded form in order to extract, as the first prediction data, its prediction data from its coded form;
- the parsing of the video stream in the at least one different quality (IV_IN) in coded form in order to extract, as the second prediction data, its respective prediction data from its respective coded form;
- extracting first input rate data from the video stream in the reference quality (IV_REF) and second input rate data from the video stream in the at least one different quality (IV_IN); and
- estimating an intrinsic visual quality of the video stream encoded from the reference quality into the at least one different quality, taking into account the evaluated complexity cost and taking into account the extracted first and second input rate data.

6. The method of any one of the claims 1-5, comprising learning to predict an intrinsic visual quality of pixel data reconstructed using the extended prediction search technique, based on any one or more of the following: the first prediction data; the second prediction data; at least one of a semantic model corresponding to the video stream, and pixel data of the video stream in the at least one different quality (IV_IN); input rate data from the video stream in the reference quality (IV_REF); and input rate data from the video stream in the at least one different quality (IV_IN).

7. The method of claim 6, comprising using the learned prediction for determining the intrinsic visual quality of pixel data reconstructed using the extended prediction search technique.

8. A device for generating a signal comprising video transcoding hints from a video stream available in a reference quality and in at least one different quality, the device comprising:
- a first terminal (INRef) configured for receiving the video stream in the reference quality (IV_REF);
- a second terminal (INI) configured for receiving the video stream in the at least one different quality (IV_IN);
- a first prediction data extraction module configured for extracting first prediction data of the received video stream in the reference quality (IV_REF), wherein the first prediction data extraction module comprises a first decoder configured for decoding the video stream in the reference quality (IV_REF) or a first parser configured for parsing the video stream in the reference quality (IV_REF) in coded form;
- a second prediction data extraction module configured for extracting second prediction data of the received video stream in the at least one different quality (IV_IN), the second prediction data extraction module comprises a second decoder configured for decoding the video stream in the at least one different quality (IV_IN) or a second parser configured for parsing the video stream in the at least one different quality (IV_IN) in coded form; and
- a prediction assessment module (PAM) configured for, based on the extracted first prediction data and on the extracted second prediction data, generating a transcoding hint signal (THS) comprising: at least one transcoding instruction hint (H2) for extending a prediction search technique for encoding the video stream from the reference quality into the at least one different quality based on the extracted first prediction data; and at least one respectively associated complexity cost of performing the respective extended prediction search technique, wherein the at least one transcoding instruction hint represents a prediction search technique refinement by adapting a search space of the prediction search technique, wherein the at least one respectively associated complexity cost represents a computational load required for encoding the video stream into the at least one other quality using the adapted search space of the prediction search technique.

9. The device of claim 8, optionally comprising a scaler configured for scaling the extracted first prediction data to a resolution of the extracted second prediction data; and
wherein the prediction assessment module is configured for:
- determining a prediction search technique extension to transform the optionally scaled extracted first prediction data into the extracted second prediction data;
- evaluating a complexity cost of performing the determined prediction search technique extension;
- determining an intrinsic visual quality difference of performing the determined prediction search technique extension, wherein the intrinsic visual quality difference is a difference in intrinsic visual quality between an encoding of the video stream from the reference quality into the at least one different quality and the video stream in the at least one different quality, wherein the intrinsic visual quality of the video stream is a value resulting from a measure of the video stream using an objective metrics (PSNR, SAD, MSE, etc.) or a subjective metrics (MOS, etc.); and
- performing the generating based on the evaluated complexity cost and the determined intrinsic visual quality difference.

10. The device of claim 9,
wherein the first prediction data extraction module comprises the first decoder in order to reconstruct its pixel data and to extract, as the first prediction data, its prediction data;
wherein the second prediction data extraction module comprises the second decoder in order to reconstruct its respective pixel data and to extract, as the second prediction data, its respective prediction data; and
wherein the prediction assessment module is configured for:
- computing a first prediction of the video stream in the reference quality based on the video stream in the reference quality (IV_REF) and its extracted prediction data;
- computing a second prediction of the video stream in the at least one different quality based on the video stream in the at least one different quality (IV_IN) and its extracted prediction data;
- determining, as the intrinsic visual quality difference of performing the determined prediction search technique extension, an intrinsic visual quality difference between the first prediction and the second prediction.

11. The device of claim 9,
wherein the first prediction data extraction module comprises the first parser in order to extract, as the first prediction data, its prediction data from its coded form;
wherein the second prediction data extraction module comprises the second decoder in order to reconstruct its respective pixel data and to extract, as the second prediction data, its respective prediction data; and
wherein the prediction assessment module is further configured for:
- extracting first input rate data from the video stream in the reference quality (IV_REF) and second input rate data from the video stream in the at least one different quality (IV_IN);
- reconstructing pixel data of the video stream in the reference quality (IV_REF) based on the extracted first prediction data and the determined prediction search technique extension;
- determining an intrinsic visual quality of the reconstructed pixel data, taking into account the evaluated complexity cost and taking into account the extracted first and second input rate data;
wherein the prediction assessment module is preferably configured to reconstruct the pixel data of the video stream in the reference quality limited to intra frames of the video stream in the reference quality.

12. The device of claim 9,
wherein the prediction assessment module is further configured for:
- determining a semantic characteristic of the video stream and obtaining a semantic model corresponding to the video stream; and
wherein the first prediction data extraction module comprises the first parser in order to extract, as the first prediction data, its prediction data from its coded form, depending on the determined semantic characteristic and the obtained semantic model;
wherein the second prediction data extraction module comprises the second parser in order to extract, as the second prediction data, its respective prediction data from its respective coded form, depending on the determined semantic characteristic and the obtained semantic model; and
wherein the prediction assessment module is further configured for, depending on the determined semantic characteristic and the obtained semantic model:
- extracting first input rate data from the video stream in the reference quality (IV_REF) and second input rate data from the video stream in the at least one different quality (IV_IN); and
- estimating an intrinsic visual quality of the video stream encoded from the reference quality into the at least one different quality, taking into account the evaluated complexity cost and taking into account the extracted first and second input rate data.

13. The device of any one of the claims 8-12, comprising a machine learning module configured for learning to predict an intrinsic visual quality of pixel data reconstructed using the extended prediction search technique, based on any one or more of the following: the first prediction data; the second prediction data; at least one of a semantic model corresponding to the video stream, and pixel data of the video stream in the at least one different quality (IV_IN); input rate data from the video stream in the reference quality (IV_REF); and input rate data from the video stream in the at least one different quality (IN_IN).

14. The device of claim 13, wherein the prediction assessment module is configured for determining the intrinsic visual quality of pixel data reconstructed using the extended prediction search technique, using the machine learning module.

15. A computer program product comprising a computer-executable program of instructions for performing, when executed on a computer, the steps of the method of any one of claims 1-7.

## Patentansprüche

1. Verfahren zur Erzeugung eines Signals mit Videotranscodierungshinweisen aus einem Videostrom, der in einer Referenzqualität (S_0) und in mindestens einer anderen Qualität (S_i, S_N) verfügbar ist, wobei das Verfahren umfasst:
- Empfangen des Videostroms in der Referenzqualität (IV_REF);
- Empfangen des Videostroms in der mindestens einen anderen Qualität (IV_IN);
- Extrahieren erster Prädiktionsdaten des empfangenen Videostroms in der Referenzqualität durch Decodieren des Videostroms in der Referenzqualität (IV REF) oder durch Parsen des Videostroms in der Referenzqualität (IV_REF) in codierter Form;
- Extrahieren zweiter Prädiktionsdaten des empfangenen Videostroms in der mindestens einen anderen Qualität durch Decodieren des Videostroms in der mindestens einen anderen Qualität (IV_IN) oder durch Parsen des Videostroms in der mindestens einen anderen Qualität (IV_IN) in codierter Form; und
- Erzeugen eines Transcodierungshinweissignals, THS, basierend auf den extrahierten ersten Prädiktionsdaten und auf den extrahierten zweiten Prädiktionsdaten, umfassend: mindestens einen Transcodierungsanweisungshinweis (H2) zum Erweitern einer Prädiktionssuchtechnik zum Codieren des Videostroms aus der Referenzqualität in die mindestens eine andere Qualität basierend auf den extrahierten ersten Prädiktionsdaten; und mindestens jeweils assoziierte Komplexitätskosten des Durchführens der jeweiligen erweiterten Prädiktionssuchtechnik, wobei der mindestens eine Transcodierungsanweisungshinweis eine Prädiktionssuchtechnikverfeinerung durch Anpassen eines Suchraums der Prädiktionssuchtechnik darstellt, wobei die mindestens jeweils assoziierten Komplexitätskosten einen Rechenaufwand darstellen, der zum Codieren des Videostroms in die mindestens eine andere Qualität unter Verwendung des angepassten Suchraums der Prädiktionssuchtechnik erforderlich ist.

2. Verfahren nach Anspruch 1, umfassend:
- optionales Skalieren der extrahierten ersten Prädiktionsdaten auf eine Auflösung der extrahierten zweiten Prädiktionsdaten;
- Bestimmen einer Prädiktionssuchtechnikerweiterung zum Umwandeln der optional skalierten extrahierten ersten Prädiktionsdaten in die extrahierten zweiten Prädiktionsdaten;
- Evaluieren von Komplexitätskosten des Durchführens der bestimmten Prädiktionssuchtechnikerweiterung; and
- Bestimmen eines intrinsischen visuellen Qualitätsunterschieds des Durchführens der bestimmten Prädiktionssuchtechnikerweiterung, wobei der intrinsische visuelle Qualitätsunterschied ein Unterschied der intrinsischen visuellen Qualität zwischen einem Codieren des Videostroms aus der Referenzqualität in die mindestens eine andere Qualität und dem Videostrom in der mindestens einen anderen Qualität ist, wobei die intrinsische visuelle Qualität des Videostroms ein Wert ist, der aus einer Messung des Videostroms unter Verwendung einer objektiven Metrik (PSNR, SAD, MSE usw.) oder einer subjektiven Metrik (MOS usw.) resultiert;
wobei das Erzeugen basierend auf den evaluierten Komplexitätskosten und dem bestimmten intrinsischen Qualitätsunterschied durchgeführt wird.

3. Verfahren von einem der Ansprüche 1 bis 2, umfassend:
- Decodieren des Videostroms in der Referenzqualität (IV REF) zum Wiederherstellen seiner Pixeldaten und zum Extrahieren seiner Prädiktionsdaten als die ersten Prädiktionsdaten;
- Decodieren des Videostroms in der mindestens einen anderen Qualität (IV_IN) zum Wiederherstellen seiner jeweiligen Pixeldaten und zum Extrahieren seiner jeweiligen Prädiktionsdaten als die zweiten Prädiktionsdaten;
- Berechnen einer ersten Prädiktion des Videostroms in der Referenzqualität basierend auf dem Videostrom in der Referenzqualität (IV_REF) und seinen extrahierten Prädiktionsdaten;
- Berechnen einer zweiten Prädiktion des Videostroms in der mindestens einen anderen Qualität basierend auf dem Videostrom in der mindestens einen anderen Qualität (IV IN) und seinen extrahierten Prädiktionsdaten; und
- Bestimmen eines intrinsischen visuellen Qualitätsunterschieds zwischen der ersten Prädiktion und der zweiten Prädiktion als den intrinsischen visuellen Qualitätsunterschied des Durchführens der bestimmten Prädiktionssuchtechnikerweiterung.

4. Verfahren von einem der Ansprüche 1 bis 2, umfassend:
- Parsen des Videostroms in der Referenzqualität (IV_REF) in codierter Form zum Extrahieren seiner Prädiktionsdaten aus ihrer codierten Form als die ersten Prädiktionsdaten;
- Decodieren des Videostroms in der mindestens einen anderen Qualität (IV_IN) zum Wiederherstellen seiner jeweiligen Pixeldaten und zum Extrahieren seiner jeweiligen Prädiktionsdaten als die zweiten Prädiktionsdaten;
- Extrahieren erster Eingangsratendaten aus dem Videostrom in der Referenzqualität (IV REF) und zweiter Eingangsratendaten aus dem Videostrom in der mindestens einen anderen Qualität (IV IN);
- Wiederherstellen von Pixeldaten des Videostroms in der Referenzqualität (IV REF) basierend auf den extrahierten ersten Prädiktionsdaten und der bestimmten Prädiktionssuchtechnikerweiterung; und
- Bestimmen einer intrinsischen visuellen Qualität der wiederhergestellten Pixeldaten unter Berücksichtigung der evaluierten Komplexitätskosten und unter Berücksichtigung der extrahierten ersten und zweiten Eingangsratendaten; wobei die Pixeldaten des Videostroms in der Referenzqualität vorzugsweise auf Intra-Frames des Videostroms in der Referenzqualität beschränkt wiederhergestellt werden.

5. Verfahren von einem der Ansprüche 1 bis 2, umfassend:
- Bestimmen einer semantischen Charakteristik des Videostroms und Abrufen eines semantischen Modells, das dem Videostrom entspricht; und Durchführen von Folgendem in Abhängigkeit von der bestimmten semantischen Charakteristik und dem abgerufenen semantischen Modell:
- Parsen des Videostroms in der Referenzqualität (IV_REF) in codierter Form zum Extrahieren seiner Prädiktionsdaten aus ihrer codierten Form als die ersten Prädiktionsdaten;
- Parsen des Videostroms in der mindestens einen anderen Qualität (IV_IN) in codierter Form zum Extrahieren seiner jeweiligen Prädiktionsdaten aus ihrer jeweiligen codierten Form als die zweiten Prädiktionsdaten;
- Extrahieren erster Eingangsratendaten aus dem Videostrom in der Referenzqualität (IV REF) und zweiter Eingangsratendaten aus dem Videostrom in der mindestens einen anderen Qualität (IV IN); und
- Schätzen einer intrinsischen visuellen Qualität des aus der Referenzqualität in die mindestens eine andere Qualität codierten Videostroms unter Berücksichtigung der evaluierten Komplexitätskosten und unter Berücksichtigung der extrahierten ersten und zweiten Eingangsratendaten.

6. Verfahren von einem der Ansprüche 1 bis 5, umfassend ein Lernen des Prädizierens einer intrinsischen visuellen Qualität von unter Verwendung der erweiterten Prädiktionssuchtechnik wiederhergestellten Pixeldaten basierend auf einem oder mehreren von Folgenden: den ersten Prädiktionsdaten; den zweiten Prädiktionsdaten; mindestens einem von einem semantischen Model, das dem Videostrom entspricht, und Pixeldaten des Videostroms in der mindestens einen anderen Qualität (IV_IN); Eingangsratendaten aus dem Videostrom in der Referenzqualität (IV_REF); und Eingangsratendaten aus dem Videostrom in der mindestens einen anderen Qualität (IV_IN).

7. Verfahren nach Anspruch 6, umfassend ein Verwenden der gelernten Prädiktion zum Bestimmen der intrinsischen visuellen Qualität von unter Verwendung der erweiterten Prädiktionssuchtechnik wiederhergestellten Pixeldaten.

8. Vorrichtung zum Erzeugen eines Signals mit Videotranscodierungshinweisen aus einem Videostrom, der in Referenzqualität und in mindestens einer anderen Qualität verfügbar ist, wobei die Vorrichtung umfasst:
- einen ersten Anschluss (INRef), der zum Empfangen des Videostroms in der Referenzqualität (IV_REF) ausgelegt ist;
- einen zweiten Anschluss (IN1), der zum Empfangen des Videostroms in der mindestens einen anderen Qualität (IV_IN) ausgelegt ist;
- ein erstes Prädiktionsdatenextraktionsmodul, das zum Extrahieren erster Prädiktionsdaten des empfangenen Videostroms in der Referenzqualität (IV-REF) ausgelegt ist, wobei das erste Prädiktionsdatenextraktionsmodul einen ersten Decoder, der zum Decodieren des Videostroms in der Referenzqualität (IV_REF) ausgelegt ist, oder einen ersten Parser umfasst, der zum Parsen des Videostroms in der Referenzqualität (IV_REF) in codierter Form ausgelegt ist;
- ein zweites Prädiktionsdatenextraktionsmodul, das zum Extrahieren zweiter Prädiktionsdaten des empfangenen Videostroms in der mindestens einen anderen Qualität (IV_IN) ausgelegt ist, wobei das zweite Prädiktionsdatenextraktionsmodul einen zweiten Decoder, der zum Decodieren des Videostroms in der mindestens einen anderen Qualität (IV_IN) ausgelegt ist, oder einen zweiten Parser umfasst, der zum Parsen des Videostroms in der mindestens einen anderen Qualität (IV_IN) in codierter Form ausgelegt ist; und
- ein Prädiktionsbewertungsmodul, PAM, das zum Erzeugen eines Transcodierungshinweissignals, THS, basierend auf den extrahierten ersten Prädiktionsdaten und auf den extrahierten zweiten Prädiktionsdaten ausgelegt ist, umfassend: mindestens einen Transcodierungsanweisungshinweis (H2) zum Erweitern einer Prädiktionssuchtechnik zum Codieren des Videostroms aus der Referenzqualität in die mindestens eine andere Qualität basierend auf den extrahierten ersten Prädiktionsdaten; und mindestens jeweils assoziierte Komplexitätskosten des Durchführens der jeweiligen erweiterten Prädiktionssuchtechnik, wobei der mindestens eine Transcodierungsanweisungshinweis eine Prädiktionssuchtechnikverfeinerung durch Anpassen eines Suchraums der Prädiktionssuchtechnik darstellt, wobei die mindestens jeweils assoziierten Komplexitätskosten einen Rechenaufwand darstellen, der zum Codieren des Videostroms in die mindestens eine andere Qualität unter Verwendung des angepassten Suchraums der Prädiktionssuchtechnik erforderlich ist.

9. Vorrichtung nach Anspruch 8, optional umfassend einen Skalierer, der zum Skalieren der extrahierten ersten Prädiktionsdaten auf eine Auflösung der extrahierten zweiten Prädiktionsdaten ausgelegt ist; und wobei das Prädiktionsbewertungsmodul ausgelegt ist zum:
- Bestimmen einer Prädiktionssuchtechnikerweiterung zum Umwandeln der optional skalierten extrahierten ersten Prädiktionsdaten in die extrahierten zweiten Prädiktionsdaten;
- Evaluieren von Komplexitätskosten des Durchführens der bestimmten Prädiktionssuchtechnikerweiterung;
- Bestimmen eines intrinsischen visuellen Qualitätsunterschieds des Durchführens der bestimmten Prädiktionssuchtechnikerweiterung, wobei der intrinsische visuelle Qualitätsunterschied ein Unterschied der intrinsischen visuellen Qualität zwischen einem Codieren des Videostroms aus der Referenzqualität in die mindestens eine andere Qualität und dem Videostrom in der mindestens einen anderen Qualität ist, wobei die intrinsische visuelle Qualität des Videostroms ein Wert ist, der aus einer Messung des Videostroms unter Verwendung einer objektiven Metrik (PSNR, SAD, MSE usw.) oder einer subjektiven Metrik (MOS usw.) resultiert; und
- Durchführen des Erzeugens basierend auf den evaluierten Komplexitätskosten und dem bestimmten intrinsischen Qualitätsunterschied.

10. Vorrichtung nach Anspruch 9,
wobei das erste Prädiktionsdatenextraktionsmodul den ersten Decoder zum Wiederherstellen seiner Pixeldaten und zum Extrahieren seiner Prädiktionsdaten als die ersten Prädiktionsdaten umfasst;
wobei das zweite Prädiktionsdatenextraktionsmodul den zweiten Decoder zum Wiederherstellen seiner jeweiligen Pixeldaten und zum Extrahieren seiner jeweiligen Prädiktionsdaten als die zweiten Prädiktionsdaten umfasst; und
wobei das Prädiktionsbewertungsmodul ausgelegt ist zum:
- Berechnen einer ersten Prädiktion des Videostroms in der Referenzqualität basierend auf dem Videostrom in der Referenzqualität (IV_REF) und seinen extrahierten Prädiktionsdaten;
- Berechnen einer zweiten Prädiktion des Videostroms in der mindestens einen anderen Qualität basierend auf dem Videostrom in der mindestens einen anderen Qualität (IV_IN) und seinen extrahierten Prädiktionsdaten;
- Bestimmen eines intrinsischen visuellen Qualitätsunterschieds zwischen der ersten Prädiktion und der zweiten Prädiktion als den intrinsischen visuellen Qualitätsunterschied des Durchführens der bestimmten Prädiktionssuchtechnikerweiterung.

11. Vorrichtung nach Anspruch 9,
wobei das erste Prädiktionsdatenextraktionsmodul einen ersten Parser zum Extrahieren seiner Prädiktionsdaten aus ihrer codierten Form als die ersten Prädiktionsdaten umfasst;
wobei das zweite Prädiktionsdatenextraktionsmodul den zweiten Decoder zum Wiederherstellen seiner jeweiligen Pixeldaten und zum Extrahieren seiner jeweiligen Prädiktionsdaten als die zweiten Prädiktionsdaten umfasst; und
wobei das Prädiktionsbewertungsmodul ferner ausgelegt ist zum:
- Extrahieren erster Eingangsratendaten aus dem Videostrom in der Referenzqualität (IV_REF) und zweiter Eingangsratendaten aus dem Videostrom in der mindestens einen anderen Qualität (IV_IN);
- Wiederherstellen von Pixeldaten des Videostroms in der Referenzqualität (IV_REF) basierend auf den extrahierten ersten Prädiktionsdaten und der bestimmten Prädiktionssuchtechnikerweiterung;
- Bestimmen einer intrinsischen visuellen Qualität der wiederhergestellten Pixeldaten unter Berücksichtigung der evaluierten Komplexitätskosten und unter Berücksichtigung der extrahierten ersten und zweiten Eingangsratendaten;
wobei das Prädiktionsbewertungsmodul vorzugsweise zum Wiederherstellen der Pixeldaten des Videostroms in der Referenzqualität beschränkt auf Intra-Frames des Videostroms in der Referenzqualität ausgelegt ist.

12. Vorrichtung nach Anspruch 9,
wobei das Prädiktionsbewertungsmodul ferner ausgelegt ist zum:
- Bestimmen einer semantischen Charakteristik des Videostroms und Abrufen eines semantischen Modells, das dem Videostrom entspricht; und
wobei das erste Prädiktionsdatenextraktionsmodul den ersten Parser zum Extrahieren seiner Prädiktionsdaten aus ihrer codierten Form als die ersten Prädiktionsdaten in Abhängigkeit von der bestimmten semantischen Charakteristik und dem abgerufenen semantischen Modell umfasst;
wobei das zweite Prädiktionsdatenextraktionsmodul den zweiten Parser zum Extrahieren seiner jeweiligen Prädiktionsdaten aus ihrer jeweiligen codierten Form als die zweiten Prädiktionsdaten in Abhängigkeit von der bestimmten semantischen Charakteristik und dem abgerufenen semantischen Modell umfasst; und
wobei das Prädiktionsbewertungsmodul in Abhängigkeit von der bestimmten semantischen Charakteristik und dem abgerufenen semantischen Modell ferner ausgelegt ist zum:
- Extrahieren erster Eingangsratendaten aus dem Videostrom in der Referenzqualität (IV REF) und zweiter Eingangsratendaten aus dem Videostrom in der mindestens einen anderen Qualität (IV IN); und
- Schätzen einer intrinsischen visuellen Qualität des aus der Referenzqualität in die mindestens eine andere Qualität codierten Videostroms unter Berücksichtigung der evaluierten Komplexitätskosten und unter Berücksichtigung der extrahierten ersten und zweiten Eingangsratendaten.

13. Vorrichtung von einem der Ansprüche 8 bis 12, umfassend ein maschinelles Lernmodul, das zum Lernen des Prädizierens einer intrinsischen visuellen Qualität von unter Verwendung der erweiterten Prädiktionssuchtechnik wiederhergestellten Pixeldaten basierend auf einem oder mehreren von Folgenden ausgelegt ist: den ersten Prädiktionsdaten; den zweiten Prädiktionsdaten; mindestens einem von einem semantischen Model, das dem Videostrom entspricht, und Pixeldaten des Videostroms in der mindestens einen anderen Qualität (IV_IN); Eingangsratendaten aus dem Videostrom in der Referenzqualität (IV_REF); und Eingangsratendaten aus dem Videostrom in der mindestens einen anderen Qualität (IV_IN).

14. Vorrichtung nach Anspruch 13, wobei das Prädiktionsbewertungsmodul zum Bestimmen der intrinsischen visuellen Qualität von unter Verwendung der erweiterten Prädiktionssuchtechnik wiederhergestellten Pixeldaten anhand des maschinellen Lernmoduls ausgelegt ist.

15. Computerprogrammprodukt, umfassend ein computerausführbares Programm von Anweisungen zum Ausführen der Schritte des Verfahrens nach einem der Ansprüche 1 bis 7, wenn auf einem Computer ausgeführt.

## Revendications

1. Procédé destiné à générer un signal comprenant des indices de transcodage vidéo à partir d'un flux vidéo disponible dans une qualité de référence (S_0) et dans au moins une qualité différente (S_i, S_N), le procédé comprenant :
- la réception du flux vidéo dans la qualité de référence (IV_REF) ;
- la réception du flux vidéo dans la ou les qualités différentes (IV_IN) ;
- l'extraction de premières données de prédiction du flux vidéo reçu dans la qualité de référence en décodant le flux vidéo dans la qualité de référence (IV_REF) ou en analysant le flux vidéo dans la qualité de référence (IV_REF) sous forme codée ;
- l'extraction de deuxièmes données de prédiction du flux vidéo reçu dans la ou les qualités différentes en décodant le flux vidéo dans la ou les qualités différentes (IV_IN) ou en analysant le flux vidéo dans la ou les qualités différentes (IV_IN) sous forme codée ; et
- d'après les premières données de prédiction extraites et les deuxièmes données de prédiction extraites, la génération d'un signal d'indice de transcodage (THS) comprenant : au moins un indice d'instruction de transcodage (H2) servant à étendre une technique de recherche de prédiction pour coder le flux vidéo de la qualité de référence vers la ou les qualités différentes d'après les premières données de prédiction extraites ; et au moins un coût de complexité respectivement associé de la réalisation de la technique étendue considérée de recherche de prédiction, l'indice ou les indices d'instructions de transcodage représentant un raffinement de la technique de recherche de prédiction en adaptant un espace de recherche de la technique de recherche de prédiction, le ou les coûts de complexité respectivement associés représentant une charge de calcul nécessaire pour coder le flux vidéo dans l'autre ou les autres qualités en utilisant l'espace de recherche adapté de la technique de recherche de prédiction.

2. Procédé selon la revendication 1, comprenant :
- la mise à l'échelle optionnelle des premières données de prédiction extraites vers une résolution des deuxièmes données de prédiction extraites ;
- la détermination d'une extension de la technique de recherche de prédiction pour transformer les premières données de prédiction extraites optionnellement mises à l'échelle en les deuxièmes données de prédiction extraites ;
- l'évaluation d'un coût de complexité de la réalisation de l'extension déterminée de la technique de recherche de prédiction ; et
- la détermination d'une différence de qualité visuelle intrinsèque de la réalisation de l'extension déterminée de la technique de recherche de prédiction, la différence de qualité visuelle intrinsèque étant une différence dans la qualité visuelle intrinsèque entre un codage du flux vidéo de la qualité de référence vers la ou les qualités différentes et le flux vidéo dans la ou les qualités différentes, la qualité visuelle intrinsèque du flux vidéo étant une valeur résultant d'une mesure du flux vidéo à l'aide d'une métrique objective (PSNR, SAD, MSE, etc.) ou d'une métrique subjective (MOS, etc.) ;
la génération étant effectuée d'après le coût de complexité évalué et la différence de qualité visuelle intrinsèque déterminée.

3. Procédé selon l'une quelconque des revendications 1 à 2, comprenant :
- le décodage du flux vidéo dans la qualité de référence (IV_REF) afin de reconstituer ses données de pixels et d'extraire, en tant que premières données de prédiction, ses données de prédiction ;
- le décodage du flux vidéo dans la ou les qualités différentes (IV_IN) afin de reconstituer ses données respectives de pixels et d'extraire, en tant que deuxièmes données de prédiction, ses données respectives de prédiction ;
- le calcul d'une première prédiction du flux vidéo dans la qualité de référence d'après le flux vidéo dans la qualité de référence (IV_REF) et ses données de prédiction extraites ;
- le calcul d'une deuxième prédiction du flux vidéo dans la ou les qualités différentes d'après le flux vidéo dans la ou les qualités différentes (IV_IN) et ses données de prédiction extraites ; et
- la détermination, en tant que différence de qualité visuelle intrinsèque de la réalisation de l'extension déterminée de la technique de recherche de prédiction, d'une différence de qualité visuelle intrinsèque entre la première prédiction et la deuxième prédiction.

4. Procédé selon l'une quelconque des revendications 1 à 2, comprenant :
- l'analyse du flux vidéo dans la qualité de référence (IV REF) sous forme codée afin d'extraire, en tant que premières données de prédiction, ses données de prédiction de sa forme codée ;
- le décodage du flux vidéo dans la ou les qualités différentes (IV IN) afin de reconstituer ses données respectives de pixels et d'extraire, en tant que deuxièmes données de prédiction, ses données respectives de prédiction ;
- l'extraction de premières données de débit d'entrée à partir du flux vidéo dans la qualité de référence (IV REF) et de deuxièmes données de débit d'entrée à partir du flux vidéo dans la ou les qualités différentes (IV_IN) ;
- la reconstitution de données de pixels du flux vidéo dans la qualité de référence (IV_REF) d'après les premières données de prédiction extraites et l'extension déterminée de la technique de recherche de prédiction ; et
- la détermination d'une qualité visuelle intrinsèque des données de pixels reconstituées, compte tenu du coût de complexité évalué et compte tenu des premières et deuxièmes données extraites de débit d'entrée ; les données de pixels du flux vidéo dans la qualité de référence étant de préférence reconstituées en se limitant à des trames intra du flux vidéo dans la qualité de référence.

5. Procédé selon l'une quelconque des revendications 1 à 2, comprenant :
- la détermination d'une caractéristique sémantique du flux vidéo et l'obtention d'un modèle sémantique correspondant au flux vidéo ; et, en fonction de la caractéristique sémantique déterminée et du modèle sémantique obtenu, la réalisation de ce qui suit :
- l'analyse du flux vidéo dans la qualité de référence (IV_REF) sous forme codée afin d'extraire, en tant que premières données de prédiction, ses données de prédiction de sa forme codée ;
- l'analyse du flux vidéo dans la ou les qualités différentes (IV_IN) sous forme codée afin d'extraire, en tant que deuxièmes données de prédiction, ses données respectives de prédiction de sa forme codée respective ;
- l'extraction de premières données de débit d'entrée à partir du flux vidéo dans la qualité de référence (IV REF) et de deuxièmes données de débit d'entrée à partir du flux vidéo dans la ou les qualités différentes (IV_IN) ; et
- l'estimation d'une qualité visuelle intrinsèque du flux vidéo codé de la qualité de référence vers la ou les qualités différentes, compte tenu du coût de complexité évalué et compte tenu des premières et deuxièmes données extraites de débit d'entrée.

6. Procédé selon l'une quelconque des revendications 1 à 5, comprenant un apprentissage visant à prédire une qualité visuelle intrinsèque de données de pixels reconstituées en utilisant la technique étendue de recherche de prédiction, sur la base d'un ou de plusieurs des éléments suivants : les premières données de prédiction ; les deuxièmes données de prédiction ; un modèle sémantique correspondant au flux vidéo et/ou des données de pixels du flux vidéo dans la ou les qualités différentes (IV_IN) ; des données de débit d'entrée provenant du flux vidéo dans la qualité de référence (IV_REF) ; et des données de débit d'entrée provenant du flux vidéo dans la ou les qualités différentes (IV_IN).

7. Procédé selon la revendication 6, comprenant l'utilisation de la prédiction apprise pour déterminer la qualité visuelle intrinsèque de données de pixels reconstituées en utilisant la technique étendue de recherche de prédiction.

8. Dispositif destiné à générer un signal comprenant des indices de transcodage vidéo à partir d'un flux vidéo disponible dans une qualité de référence et dans au moins une qualité différente, le dispositif comprenant :
- une première borne (INRef) configurée pour la réception du flux vidéo dans la qualité de référence (IV_REF) ;
- une deuxième borne (IN1) configurée pour la réception du flux vidéo dans la ou les qualités différentes (IV_IN) ;
- un module d'extraction de premières données de prédiction configuré pour extraire des premières données de prédiction du flux vidéo reçu dans la qualité de référence (IV_REF), le module d'extraction de premières données de prédiction comprenant un premier décodeur configuré pour décoder le flux vidéo dans la qualité de référence (IV_REF) ou un premier analyseur configuré pour analyser le flux vidéo dans la qualité de référence (IV_REF) sous forme codée ;
- un module d'extraction de deuxièmes données de prédiction configuré pour extraire des deuxièmes données de prédiction du flux vidéo reçu dans la ou les qualités différentes (IV IN), le module d'extraction de deuxièmes données de prédiction comprenant un deuxième décodeur configuré pour décoder le flux vidéo dans la ou les qualités différentes (IV_IN) ou un deuxième analyseur configuré pour analyser le flux vidéo dans la ou les qualités différentes (IV_IN) sous forme codée ; et
- un module d'appréciation de prédiction (PAM) configuré pour, d'après les premières données de prédiction extraites et sur les deuxièmes données de prédiction extraites, générer un signal d'indice de transcodage (THS) comprenant : au moins un indice d'instruction de transcodage (H2) servant à étendre une technique de recherche de prédiction pour coder le flux vidéo de la qualité de référence vers la ou les qualités différentes d'après les premières données de prédiction extraites ; et au moins un coût de complexité respectivement associé de la réalisation de la technique étendue considérée de recherche de prédiction, l'indice ou les indices d'instructions de transcodage représentant un raffinement de la technique de recherche de prédiction en adaptant un espace de recherche de la technique de recherche de prédiction, le ou les coûts de complexité respectivement associés représentant une charge de calcul nécessaire pour coder le flux vidéo dans l'autre ou les autres qualités en utilisant l'espace de recherche adapté de la technique de recherche de prédiction.

9. Dispositif selon la revendication 8, comprenant optionnellement un moyen de mise à l'échelle configuré pour mettre à l'échelle les premières données de prédiction extraites vers une résolution des deuxièmes données de prédiction extraites ; et
le module d'appréciation de prédiction étant configuré pour :
- déterminer une extension de la technique de recherche de prédiction pour transformer les premières données de prédiction extraites optionnellement mises à l'échelle en les deuxièmes données de prédiction extraites ;
- évaluer un coût de complexité de la réalisation de l'extension déterminée de la technique de recherche de prédiction ;
- déterminer une différence de qualité visuelle intrinsèque de la réalisation de l'extension déterminée de la technique de recherche de prédiction, la différence de qualité visuelle intrinsèque étant une différence dans la qualité visuelle intrinsèque entre un codage du flux vidéo de la qualité de référence vers la ou les qualités différentes et le flux vidéo dans la ou les qualités différentes, la qualité visuelle intrinsèque du flux vidéo étant une valeur résultant d'une mesure du flux vidéo à l'aide d'une métrique objective (PSNR, SAD, MSE, etc.) ou d'une métrique subjective (MOS, etc.) ; et
- effectuer la génération d'après le coût de complexité évalué et la différence de qualité visuelle intrinsèque déterminée.

10. Dispositif selon la revendication 9,
le module d'extraction de premières données de prédiction comprenant le premier décodeur afin de reconstituer ses données de pixels et d'extraire, en tant que premières données de prédiction, ses données de prédiction ;
le module d'extraction de deuxièmes données de prédiction comprenant le deuxième décodeur afin de reconstituer ses données respectives de pixels et d'extraire, en tant que deuxièmes données de prédiction, ses données respectives de prédiction ; et
le module d'appréciation de prédiction étant configuré pour :
- calculer une première prédiction du flux vidéo dans la qualité de référence d'après le flux vidéo dans la qualité de référence (IV_REF) et ses données de prédiction extraites ;
- calculer une deuxième prédiction du flux vidéo dans la ou les qualités différentes d'après le flux vidéo dans la ou les qualités différentes (IV_IN) et ses données de prédiction extraites ;
- déterminer, en tant que différence de qualité visuelle intrinsèque de la réalisation de l'extension déterminée de la technique de recherche de prédiction, une différence de qualité visuelle intrinsèque entre la première prédiction et la deuxième prédiction.

11. Dispositif selon la revendication 9, le module d'extraction de premières données de prédiction comprenant le premier analyseur afin d'extraire, en tant que premières données de prédiction, ses données de prédiction de sa forme codée ;
le module d'extraction de deuxièmes données de prédiction comprenant le deuxième décodeur afin de reconstituer ses données respectives de pixels et d'extraire, en tant que deuxièmes données de prédiction, ses données respectives de prédiction ; et
le module d'appréciation de prédiction étant en outre configuré pour :
- extraire des premières données de débit d'entrée à partir du flux vidéo dans la qualité de référence (IV_REF) et des deuxièmes données de débit d'entrée à partir du flux vidéo dans la ou les qualités différentes (IV_IN) ;
- reconstituer des données de pixels du flux vidéo dans la qualité de référence (IV REF) d'après les premières données de prédiction extraites et l'extension déterminée de la technique de recherche de prédiction ;
- déterminer une qualité visuelle intrinsèque des données de pixels reconstituées, compte tenu du coût de complexité évalué et compte tenu des premières et deuxièmes données extraites de débit d'entrée ;
le module d'appréciation de prédiction étant de préférence configuré pour reconstituer les données de pixels du flux vidéo dans la qualité de référence en se limitant à des trames intra du flux vidéo dans la qualité de référence.

12. Dispositif selon la revendication 9,
le module d'appréciation de prédiction étant en outre configuré pour :
- déterminer une caractéristique sémantique du flux vidéo et obtenir un modèle sémantique correspondant au flux vidéo ; et
le module d'extraction de premières données de prédiction comprenant le premier analyseur afin d'extraire, en tant que premières données de prédiction, ses données de prédiction de sa forme codée, en fonction de la caractéristique sémantique déterminée et du modèle sémantique obtenu ;
le module d'extraction de deuxièmes données de prédiction comprenant le deuxième analyseur afin d'extraire, en tant que deuxièmes données de prédiction, ses données respectives de prédiction de sa forme codée respective, en fonction de la caractéristique sémantique déterminée et du modèle sémantique obtenu ; et
le module d'appréciation de prédiction étant en outre configuré pour, en fonction de la caractéristique sémantique déterminée et du modèle sémantique obtenu :
- extraire des premières données de débit d'entrée à partir du flux vidéo dans la qualité de référence (IV REF) et de deuxièmes données de débit d'entrée à partir du flux vidéo dans la ou les qualités différentes (IV_IN) ; et
- estimer une qualité visuelle intrinsèque du flux vidéo codé de la qualité de référence vers la ou les qualités différentes, compte tenu du coût de complexité évalué et compte tenu des premières et deuxièmes données extraites de débit d'entrée.

13. Dispositif selon l'une quelconque des revendications 8 à 12, comprenant un module d'apprentissage automatique configuré pour apprendre à prédire une qualité visuelle intrinsèque de données de pixels reconstituées en utilisant la technique étendue de recherche de prédiction, sur la base d'un ou de plusieurs des éléments suivants : les premières données de prédiction ; les deuxièmes données de prédiction ; un modèle sémantique correspondant au flux vidéo et/ou des données de pixels du flux vidéo dans la ou les qualités différentes (IV_IN) ; des données de débit d'entrée provenant du flux vidéo dans la qualité de référence (IV_REF) ; et des données de débit d'entrée provenant du flux vidéo dans la ou les qualités différentes (IN_IN).

14. Dispositif selon la revendication 13, le module d'appréciation de prédiction étant configuré pour déterminer la qualité visuelle intrinsèque de données de pixels reconstituées en utilisant la technique étendue de recherche de prédiction, à l'aide du module d'apprentissage automatique.

15. Produit de programme informatique comprenant un programme exécutable par ordinateur d'instructions destinées à réaliser, lorsqu'elles sont exécutées sur un ordinateur, les étapes du procédé selon l'une quelconque des revendications 1 à 7.
